(19) Europäisches Patentamt
European Patent Office
Office européen des brevets

(11) EP 3 080 951 B1

(12) **EUROPEAN PATENT SPECIFICATION**

(45) Date of publication and mention
of the grant of the patent:
**25.12.2019 Bulletin 2019/52**

(21) Application number: **13815105.5**

(22) Date of filing: **09.12.2013**

(51) Int Cl.:
*H04L 12/26* (2006.01)          *H04J 3/06* (2006.01)

(86) International application number:
**PCT/GB2013/053240**

(87) International publication number:
**WO 2015/087023 (18.06.2015 Gazette 2015/24)**

(54) **METHOD AND DEVICES FOR PACKET SELECTION**

PAKETAUSWAHLVERFAHREN UND -VORRICHTUNGEN

PROCÉDÉ ET DISPOSITIFS DE SÉLECTION DE PAQUETS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.10.2016 Bulletin 2016/42**

(73) Proprietors:
• **Khalifa University of Science and Technology**
**Abu Dhabi (AE)**
• **British Telecommunications public limited**
**company**
**London EC1A 7AJ (GB)**
• **Emirates Telecommunications Corporation**
**Abu-Dhabi (AE)**

(72) Inventors:
• **CHALOUPKA, Zdenek**
**Abu Dhabi (AE)**
• **AWEYA, James**
**Abu Dhabi (AE)**

(74) Representative: **J A Kemp LLP**
**14 South Square**
**Gray's Inn**
**London WC1R 5JJ (GB)**

(56) References cited:
**WO-A1-2004/075447**

• **TAKAHIDE MURAKAMI ET AL: "Improvement of
synchronization accuracy in IEEE 1588 using a
queuing estimation method", PRECISION CLOCK
SYNCHRONIZATION FOR MEASUREMENT,
CONTROL AND COMMUNICATION, 2009. ISPCS
2009. INTERNATIONAL SYMPOSIUM ON, IEEE,
PISCATAWAY, NJ, USA, 12 October 2009
(2009-10-12), pages 1-5, XP031570869, ISBN:
978-1-4244-4391-8**

**Description**

Field of the Invention

The present invention relates to packet selection techniques that can be used in conjunction with a clock recovery mechanism. It is particularly, but not exclusively, concerned with packet selection in the context of time and/or frequency synchronization over packet networks using, for example, the IEEE 1588 Precision Time Protocol (PTP).

Background of the Invention

IEEE 1588 PTP is defined in the IEEE 1588-2002 (Version 1) and 1588-2008 (Version 2) standards. IEEE 1588 is designed as an improvement to current methods of synchronization within a distributed network of devices. It is designed for systems requiring very high accuracies beyond those attainable using Network Time Protocol (NTP). The IEEE 1588, unlike NTP, is able to deliver timing accuracy well under a microsecond. It is also designed for applications that cannot bear the cost of a GPS receiver at each node, or for which the GPS signals are inaccessible as is the case with a majority of picocell and femtocell base stations.

IEEE 1588 is now the industry accepted packet-based protocol used for transferring timing information to clocks of distributed systems to allow them to be synchronized to a master with accuracies in the nanoseconds level. PTP is a message based protocol that can be implemented across a range of packet based networking technologies, not limited to Ethernet. The underlying principle is a master/slave concept based on regular exchange of synchronization messages. IEEE 1588 synchronizes all slave clocks by allowing to them adjust their frequency/time to highest quality clock (the GrandMaster clock).

Packet delay variation ("PDV") is the main factor affecting the accuracy and stability of slave clocks when using packet timing protocols such as IEEE 1588 PTP. The PDV is introduced by packet network devices such as switches and routers that receive and queue packets between a sender and receiver. PDV is a direct contributor to the noise in the recovered clock. Unless mitigated, the higher the PDV, the higher the clock noise and subsequently the poorer the clock quality. If the clock noise exceeds application defined thresholds the clocks are unusable for the end system. The term clock noise here refers to all impairments to the timing information recovered at the slave including jitter, wander and other imperfections in the recovered clocks.

For instance, for time synchronization, the delay variations experienced by packets traversing the packet network translate into noise in the slave's perception of the time at the master. Variable delay causes a varying estimate of the time offset between slave and master clocks. For these reasons, synchronization mechanisms used for end-to-end timing transfer require PDV mitigation mechanisms in order to accurately reconstruct the master clock. The performance of the slave's clock recovery process is highly affected by how efficient the packet selection algorithm (i.e., PDV mitigation mechanism) used by the slave is at reducing the level of PDV seen by the slave.

*Overview of IEEE 1588v2 PTP*

The GrandMaster (GM) is the timing reference in a domain and transmits synchronization information to the clocks residing in its domain. In IEEE 1588v2 PTP messages are categorized into event and general messages. All IEEE 1588 PTP messages have a common header. Event messages are timed messages with generated accurate timestamp at both transmission and receipt of each message. Event messages have to be accurately timestamped since the accuracy in transmission and receipt timestamps directly affects clock distribution accuracy. A timestamp event is generated at the time of transmission and reception of any event message. The set of event messages consists of Sync, Delay_Req, Pdelay_Req and Pdelay_Resp. The set of general messages consists of Announce, Follow_Up, Delay_Resp, Pdelay_Resp_Follow_Up, Management and Signaling.

IEEE 1588 PTP allows for two different types of timestamping methods, either one-step or two step. One-step clocks update time information within event messages (Sync and Delay_Req) on-the-fly, while two-step clocks convey the precise timestamps of packets in general messages (Follow_Up and Delay_Resp).

The Sync, Delay_Req, Follow_Up and Delay_Resp messages are used to generate and communicate the timing information needed to synchronize ordinary and boundary clocks using the delay request-response mechanism. A Sync message is transmitted by a master to its slaves and either contains the exact time of its transmission or is followed by a Follow_Up message containing this time. In a two step ordinary or boundary clock, the Follow_Up message communicates the value of the departure timestamp for a particular Sync message. A Delay_Req message is a request for the receiving node to return the time at which the Delay_Req message was received, using a Delay_Resp message.

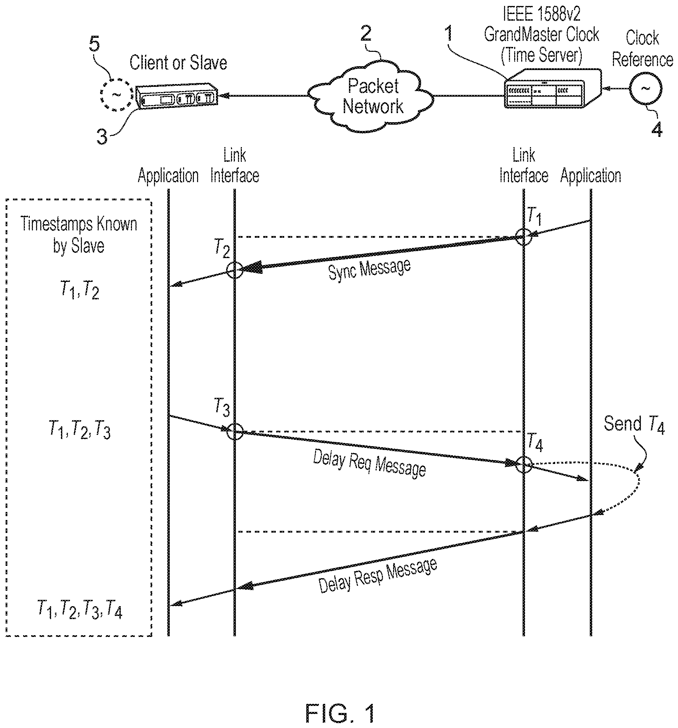

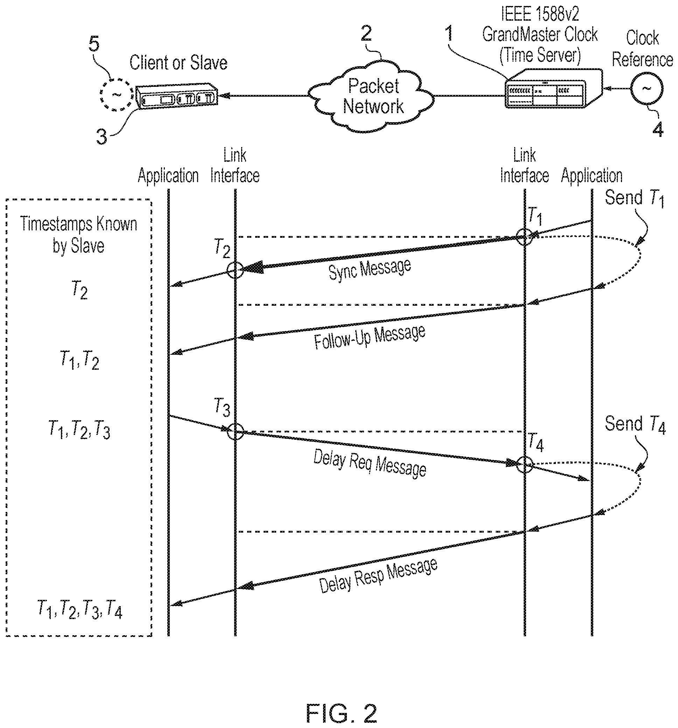

A basic pattern of synchronization message exchanges for the one step and two-step clocks are illustrated in Figure 1 and Figure 2, respectively. The message exchange pattern for the one-step clock can be explained as follows. The master 1 sends a Sync message to the slave 3 over the network 2 and includes the exact transmission time $T_1$

timestamp in the Sync message as it departs. The timestamp should be generated by the hardware as close as possible to the physical layer (network media) in order to minimize the error introduced by the delay between the application layer and physical layer. The slave 3 receives the Sync message and notes the time of the reception $T_2$. Next, the slave 3 sends a Delay_Req message to the master 1 and notes the time at which it was sent $T_3$. The master 1 receives the Delay_Req message and notes the time of reception $T_4$. The master conveys to the slave 3 the timestamp $T_4$ by embedding it in a Delay_Resp message.

At the end of this PTP message exchange, the slave 3 possesses all four timestamps $\{T_1, T_2, T_3, T_4\}$. These timestamps may be used to compute the offset of the slave's clock 5 with respect to the master clock 4 and the mean propagation time of messages between the two clocks. The computation of offset and propagation time assumes that the master-to-slave and slave-to-master propagation times are equal, i.e. a symmetrical communication path.

Like NTP, PTP requires an accurate measurement of the communication path delay between the time server (master) 1 and the client (slave) 3. PTP measures the exact message transmit and receive times and uses these times to calculate the communication path delay and clock offset. This delay measurement principle determines the path delay between devices on the network and the local clocks 4 are adjusted for this delay using the series of messages sent between master 1 and slaves 3 (as shown in Figure 1 and Figure 2).

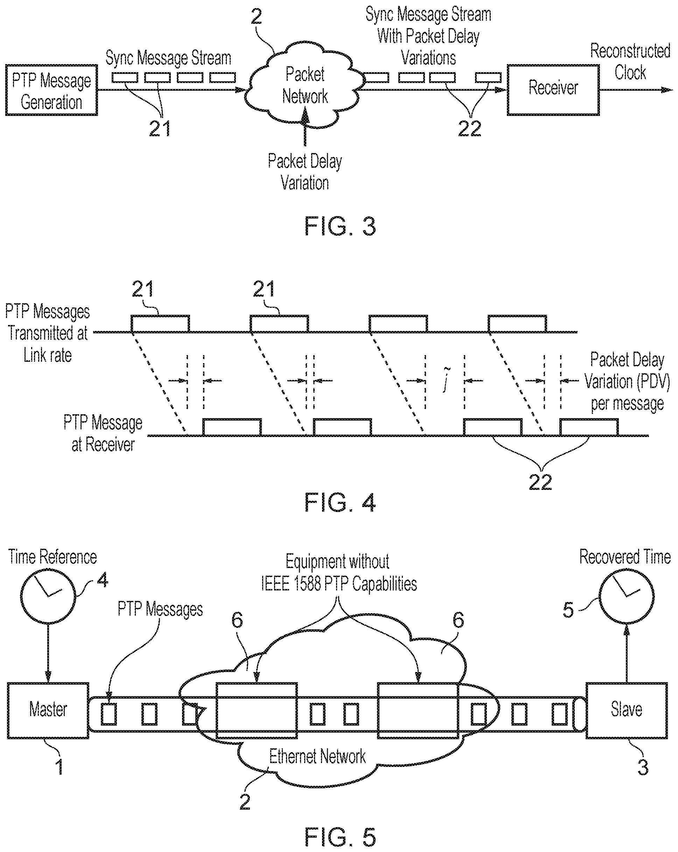

In addition to the fixed propagation (or physical communication medium) delay, any packet traveling through the packet network 2 might experience additional variable delays as it travels from sender to receiver due to traffic loading and scheduling in the network components (switches, routers). That is, instead of the constant travel time (caused by the physical distance) the packets show variable delay according to the network topology and current load. Figure 3 and Figure 4 illustrate this with the original messages 21 being transmitted at a constant interval, but the message stream 22 arriving at the receiver having variable inter-message gaps due to the PDV.

A packet selection mechanism can be used in this end-to-end timing transfer scenario to reduce the effects of PDV on the recovered clock at the slave.

Murakami et al. "Improvement of Synchronization Accuracy in IEEE 1588 Using a Queuing Estimation Method", IEEE Symposium on Precision Clock Synchronization for Measurement, Control, and Communication, Oct 12-16 2009 proposes an improvement technique for IEEE time synchronization systems by using dedicated probing packets to mitigate time synchronization deterioration caused by queuing delay in a packet switch. WO 2004/075447 A1 proposes a method of aligning clock domains over an asynchronous network, where the predicated delay is estimated for packets transmitted between a source and destination.

*Packet Pre-Processing (Selection) for Clock Recovery*

One way of delivering frequency/time from a master 1 to a slave 3 is to send IEEE 1588 PTP messages in an end-to-end manner as illustrated in Figure 5 (i.e. without any assistance from the intermediate network devices 6). In this case the slave 3 is solely responsible for correctly recovering the master clock signal in the presence of all the PDV generated by the network 2. Compared to the other frequency/time transfer methods (e.g., using hop-by-hop Boundary Clocks or Transparent Clocks), clock recovery here is more challenging because the slave 3 is exposed to all the PDV generated by the intermediate packet network 2.

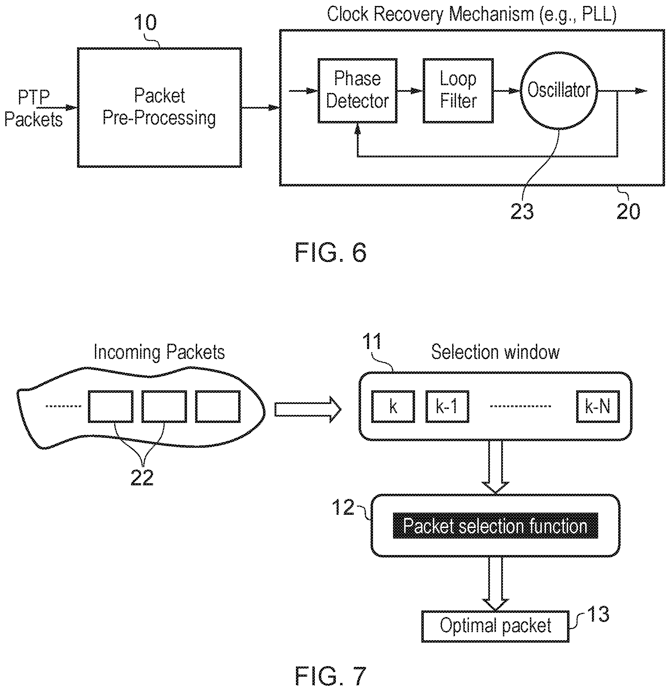

The recovered clock from the PTP timing signal at the slave 3 contains clock noise (contributed largely by PDV) that needs to be removed. A filtering process is typically used at the slave 3 to filter out the clock noise, thus generating a "smooth" clock output. This process is also often referred to as clock recovery. The clock recovery process in packet networks often involves two major components, a packet pre-processing module 10 and a phase-locked loop (PLL) or servo control mechanism 20 as illustrated in Figure 6.

• **Packet Pre-Processing**: This module 10 in Figure 6 represents the application of specialized algorithms that are used to mitigate the impact of network-induced PDV. The goal of the packet selection block is to select from all the input packets to the slave clock a certain subset that are the least affected by the packet switched network. These packets would thus best reflect the timing signal at the transmitter.

• **Phase-Locked Loop**: This module 20 represents a servo control function that disciplines the local clock to bring its output (frequency or time) into alignment with the master's. The servo control function is generally present in all clock recovery mechanisms.

These two mechanisms are used together to attenuate the clock noise introduced by the packet network to levels commensurate with the clock output requirements of the application. Both the packet selection block 10 and the low pass filter function of the PLL 20 work to remove noise from the packet timing signal to faithfully re-create the timing source. The 'cleaned' timing signal can then be used to discipline the local oscillator.

The two modules in Figure 6 are outside of the scope of the IEEE 1588 standard. The packet pre-processing algorithms 10 and PLL mechanisms 20 are vendor implementation specific and often proprietary. These two mechanisms and the quality of the PLL oscillator 23 represent the two most important factors that determine the performance of a clock. The PLL 20 introduces a low-pass filter characteristic in the path between the master and the slave clock output, and a high-pass filter characteristic between the local oscillator and the clock output (PLL output).

The PLL 20 has low-pass and high-pass characteristics with a common corner frequency. The bandwidth of the loop comprises the frequencies below the corner frequency. The following observations can be made about the filtering characteristics of the PLL:

- All components of the PDV after packet pre-processing entering the loop and above the corner frequency will be filtered out (attenuated) significantly. All components of the PDV after packet pre-processing below the corner frequency (mostly wander, defined as noise or jitter below 10 Hz) will be passed through to the clock output.

- All components of the local PLL oscillator 23 clock noise below the corner frequency will be filtered out. All components of the local oscillator noise above the corner frequency will be passed through to the clock output.

The filtering behavior of the PLL 20 is equivalent to an "averaging" process where the time-constant represents the duration over which the averaging is performed. The PLL cut-off frequency and time-constant have a reciprocal relationship and are equivalent descriptors of the low-pass filtering action.

From the above discussion we see that in the absence of packet pre-processing, the low-pass filtering action of the PLL 20 is solely responsible for attenuating the entire PDV so that the recovered clock will be compliant with the clock requirements of the application. To achieve this, the low-pass filter of the PLL may have to be designed to have a very small cutoff frequency (meaning PLL has very small bandwidth). The drawback, however, in doing this is that the very low-pass PLL leads to a high-pass characteristic where the loop allows more local oscillator noise to pass through to the clock output. This means that the reduction of the bandwidth of the PLL should not be done arbitrarily, but should take into account the quality of the local oscillator. It is for these reasons that applications with more stringent requirements demand higher quality oscillators. A high quality oscillator is stable and generates less noise that passes through to the clock output. At this point, it should be appreciated that packet pre-processing significantly helps to reduce the clock noise power at the PLL input and thereby can be used to alleviate the requirement of a very high quality (and expensive) oscillator. Efficient pre-processing can allow for the use of less expensive oscillators.

In the general case without packet pre-processing, synchronization performance is affected to a great extent by network design and its characteristics: traffic loading, PDV, route changes, etc. The greater the PDV, the more difficult it is to maintain synchronization between master and slave. Even with packet pre-processing (selection), the quality of the recovered clock at the slave will depend on how well the packet selection algorithm screens out the PDV in the arriving PTP messages.

*Basics of Packet Selection for Clock Recovery*

The basic schema of the packet selection process is illustrated in Figure 7. The idea of packet selection for clock recovery is as follows. In the packet network 2 there is a constant stream of timing related packets 22 (see Figure 3). Each timing packet arrives experiencing a different delay generated according to the actual load along its path. A packet selection is performed within a certain window or "sampling interval" 11 (a set of previously arrived packets of length L). A packet selection function 12 then tries to repeatedly select the "best" or optimal packet 13 within the window which has the lowest delay variance (PDV), and present this to the clock recovery mechanism with the goal that it minimizes the overall clock noise introduced by the PDV.

The most important piece or block in Figure 7 is how well the "packet selection function" 12 is implemented as this block performs the operation of selecting the most appropriate packet from the set of the last packets in the selection window 11. The following section discusses some example packet selection functions.

*Commonly Used Packet Selection Techniques*

As explained above, in order to reduce the clock noise produced as a result of the PDV, the slave 3 implements a packet selection (pre-processing) technique that allows it to use only a subset of the received timing packets, that is, the timing packets that are least affected by PDV. The idea is to select a specific subset of the PDV affected samples, having similar delay properties, among the entire population of PDV samples and pass these to the slave clock recovery mechanism.

Let $\{x_k\}$ denote samples of a hypothetical packet time-error signal $x(t)$. In packet timing scenarios the time error signal is typically based on measurements of the transit delay of (timing) packets over the network between the master 1 and slave 3. Let $x_n$ represent the delay of the $n$th timing packet through the network and let

$$X_k = \{x_n\}, \quad kL \le n \le (k+1)L - 1, \tag{1}$$

be a vector representing the $k$th window of size $L$ on which the packet selection operation is performed. Typically, in PTP the packet transit delay $x_n$ (the elements of vector $X_k$) of Sync messages are calculated by taking the difference between the departure timestamp $T_1(n)$ and the arrival timestamp $T_2(n)$:

$$x_n = T_2(n) - T_1(n). \tag{2}$$

Similarly, the transit delays of Delay_Req messages can be calculated using $T_4(n)$ and $T_3(n)$ as shown in Figure 1 and Figure 2. For the $k$th window, the packet selector obtains a single value from $X_k$ by using a function that operates on this vector,

$$y_k = g(X_k) \tag{3}$$

Some examples of the simplest packet selection methods are described below. Other more advanced methods such as percentile, band and cluster are described in the literature (e.g., [1][2][[3][4]).

• **Sample Minimum Packet Selection Method ("Min"):**

This method involves selecting the minimum delay within a window of delay samples.
This selection function can be represented as follows:

$$g(X_k) = \min\{x_n\}, \quad kL \le n \le (k+1)L - 1 \tag{4}$$

The minimum packet selection and percentile packet selection both focus on packet data at the floor. The notion of "floor delay" is equivalent to the notion of minimum possible transit delay of packets over a network.

• **Sample Maximum Packet Selection Method ("Max"):**

This method involves selecting the maximum delay within a window of delay samples.
This selection function can be represented as follows:

$$g(X_k) = \max\{x_n\}, \quad kL \le n \le (k+1)L - 1 \tag{5}$$

• **Sample Mean Packet Selection Method ("Mean"):**

This method involves selecting the mean delay of delay samples within a window.
This selection function can be represented as follows:

$$g(X_k) = \frac{1}{L} \sum_{n=kL}^{(k+1)L-1} x_n \tag{6}$$

In the above packet selection methods, the representative delay value obtained in a window (min, max, or mean value) are used in some form in the packet recovery mechanism at the slave.

*Timing Precision Evaluation in Packet Networks*

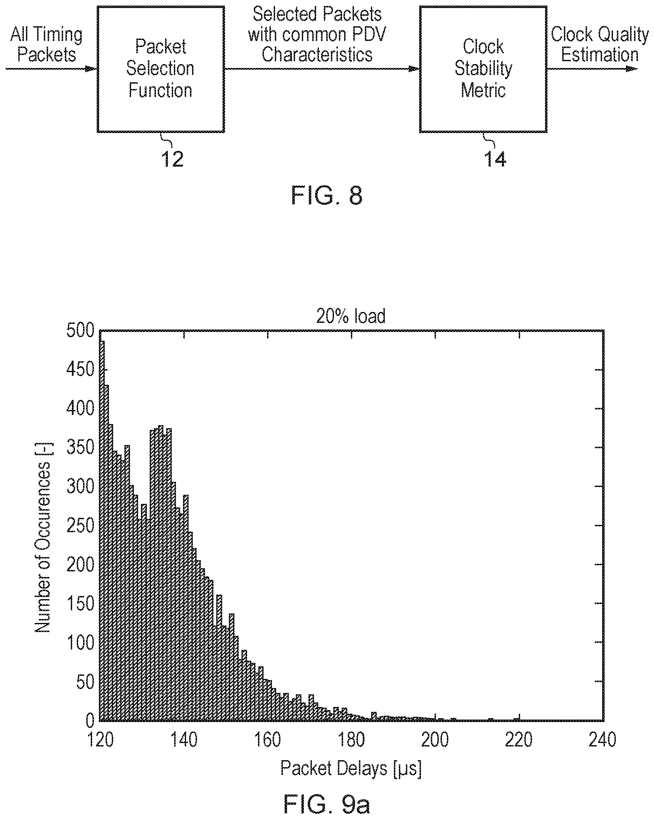

In order for a slave to optimally recover time and frequency, packet selection is essential. The performance of a packet selection (pre-processing) method can be assessed by applying a stability quantification metric over the selected group of samples. This is illustrated schematically in Figure 8. This assessment is done in order to get an estimation of the achievable output clock quality. Such a metric could serve as a useful tool for comparing different packet pre-processing methods.

As illustrated in Figure 8, with packet pre-processing, a packet selection algorithm 12 is applied to the packet delay sequence, and the standard metrics such as TDEV (Time Deviation), MATIE (Maximum Average Time Interval Error), or MAFE (Maximum Average Frequency Error) calculation 14 is applied on the modified packet delay sequence. If $X_k$ is the original packet delay sequence, and $X'_k$ is the modified packet delay sequence, the idea is that TDEV, MATIE, or MAFE operates on the $X'_k$ sequence rather than original $X_k$ sequence. In this way, calculations with packet selection provide insight into how a slave clock recovery algorithm might perform under the studied network conditions.

As indicated above, a number of packet selection algorithms can be applied to $X_k$. These time windows can be either overlapping or non-overlapping. In the minimum packet selection method ("min"), effective for sequences with a good population of minimum delay packets, the minimum in the window is selected. The *percentile* method takes a number of packets at or near the minimum, and averages them together to produce an $X'_k$ sequence sample. The *band* selection method first sorts all the data in a time window from minimum to maximum, then selects a cluster of points at some chosen range, say between the 20th and 30th percentiles, and averages them together to produce a sample in the $X'_k$ sequence.

We explain briefly here why TDEV has become an important stability qualification metric for timing studies. This has become a common metric that is used to analyze the performance of a packet-based synchronization mechanism such as IEEE 1588 PTP. Variances are commonly used to characterize the fluctuation of a frequency source, but standard variance is not suitable for frequency stability measurement [2, 3]. The Allan Variance/Deviation, Modified Alan Variance/Deviation (MVAR/MDEV) and Time Deviation (TDEV) are the most common metrics used to quantify frequency stability. Specifically, TDEV is related to the MDEV and is used globally in the telecommunications industry to measure the time stability of frequency sources. However, it has been noted in the ITU-T standard [4] there can be some discrepancies between the information provided by a given PDV metrics and the real performance achieved by a slave clock. The regular TDEV metrics is defined as follows:

$$\sigma(\tau) = TDEV(\tau) = \sqrt{\frac{1}{6n^2}\left\langle\left[\sum_{i=1}^{n}(x_{i+2n} - 2x_{i+n} + x_i)\right]^2\right\rangle} \qquad (7)$$

where $\tau = n \cdot \tau_0$, $\tau_0$ is a packet arrival frequency, $n$ is length of a selection window, and $\langle \cdot \rangle$ is an ensemble average. In the use of the regular TDEV with packet pre-processed, the packet selection is done prior to the stability calculation, where the TDEV is applied to the resulting sequence (which is performed in the traditional way). This is how we compare the performance of all the proposed techniques set out.

Note the above approach for computing TDEV using packet pre-processing is different from the integrated packet selection approach, where the packet selection is integrated into the metric calculation [2][4]. Generally integrated packet selection approach involves replacing a full population averaging calculation with a selection process that may or may not itself include averaging. Integrated packet selection replaces the averaging with a selection process such as the min, percentile, and band. As a result a new self-contained metric is formed such as minTDEV, percentileTDEV, bandTDEV, minMAFE, percentileMAFE, or bandMAFE. An example of this is to replace the averaging operation present within the TDEV calculation with a minimum selection process forming a new calculation, i.e. minTDEV(x) [2][4].

*Review of Some Packet Selection Studies*

So far, there has not been extensive research done in the area of packet selection mechanisms for the clock recovery beyond the basics described in the ITU-T standards (min, percentile, band, cluster). The most relevant research in this area was carried out by Hadžic and Morgan [1]. They proposed an adaptive technique based on very simple criteria (minimum, maximum and mean) for the packet selection. These simple criteria were derived from studies carried out by measuring and analyzing the PDV characteristics of different network topologies and traffic loading.

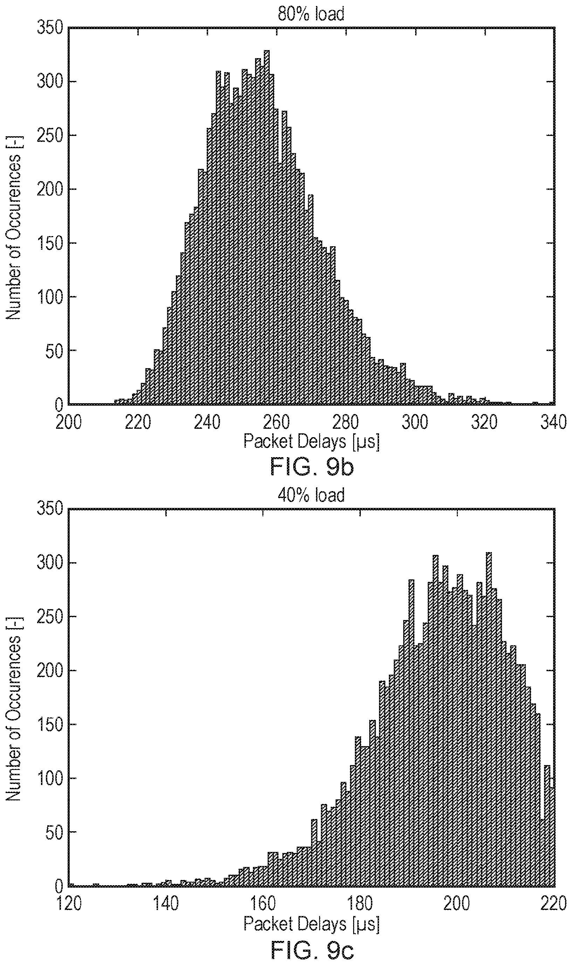

In order to analyze the performance of the techniques proposed in the present invention the PDV distributions obtained in [1] will be used, which are deemed realistic enough for synchronization studies. The PDV distribution in [1] has been accurately modelled to obtain the histograms in Figure 9. Details of the network topologies, traffic loading, PDV characterization and models, and packet selection discussions are given in [1].

Based on the measured PDV distributions three different types of packet selection techniques were derived in [1]. We will refer to the PDV distributions for the 20%, 40% and 80% load scenarios as the minPDV, maxPDV and meanPDV distributions, respectively. The studies in [1] determined that for the 20%, 40% and 80% network load scenarios, the minimum, maximum and mean packet selection criteria were optimal, respectively. We therefore call this technique here the Min/Max/Mean Algorithm (MMMA).

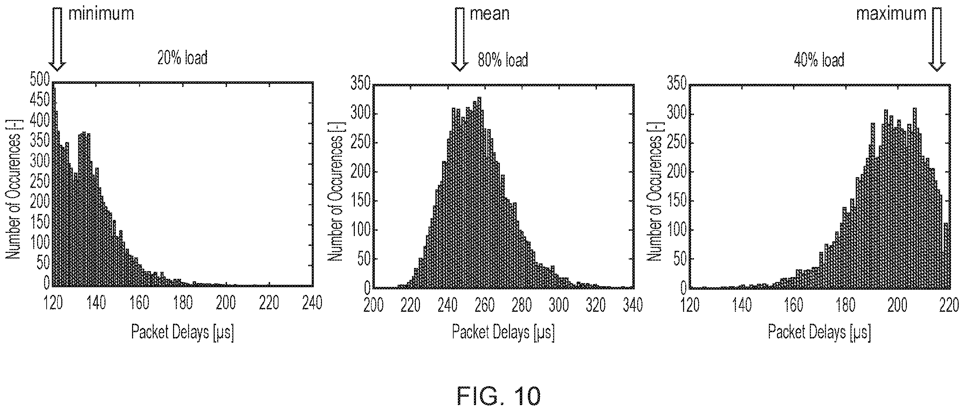

The idea behind the selection of these particular criteria in [1] is simple. By applying the criteria on the different distribution in Figure 9 and analyzing their effects, it was observed that these criteria resulted in the selection of timing packets that produced the least variance as shown in Figure 10. Paper [1] observes that for the leftmost (rightmost) figures, there are a rich number of samples (packets) arriving with minimum (maximum) values and as a result there is no variance if the minimum (maximum) values are selected; for the middle figure, the least variance is obtained if the mean value of the selection window is selected.

From the above discussion we can see that the MMMA is directly tied to the PDV distribution (Figure 10). Specifically, it constrains the types of PDV distributions to three. As a packet selection algorithm plays an important role in the mitigation of PDV and given the wide possible range of network topologies and traffic loading, we see that relying on the assumption of the existence of only three different PDV distributions is unrealistic.

An object of the present invention is to provide a packet selection technique that significantly reduces the PDV when the selected packets are compared to the complete set of packets received by a device.

An further object of the present invention is to provide a packet selection technique that works well regardless of the network topology, traffic loading, and PDV distribution. In particular it is desirable that any technique should work well regardless of the type of PDV distribution it is exposed to (for example, whether left-skewed, centered or right-skewed as shown in Figure 9).

It is a further object of the present invention to provide a packet selection technique which can be used in a clock synchronization technique to improve the overall quality of the synchronized clock in the slave device, more particularly by reducing the clock variation introduced by PDV.

Summary of the Invention

At their broadest, methods of the present invention provide a packet selection method which selects the packets which have characteristics closest to an optimal delay characteristic.

A first aspect of the present invention provides a method of selecting packets as set out in claim 1.

The method of this aspect can provide a packet (or message) selection technique that selects packets with low packet delay variation (PDV) or noise induced by their passage across the network. The selected packets can then be used for applications which require low noise characteristics, such as clock synchronization.

Preferably the groups of packets are all the packets arriving within a selected time window prior to the current time (i.e. the time at which the selection process runs).

The choice of the length of window may be varied depending on the situation. A longer window requires greater storage of previous values, and a more complex sorting operation to calculate the median. A shorter window runs the risk of not being statistically representative of the overall data set and being skewed by low frequency noise effects.

The method further includes the steps of: sending, from the first device to the second device, timestamps which are the time of sending said packets from the first device according to a clock in the first device; and determining, for each packet in said group, the inter-departure time between the packet and the preceding packet from the first device, wherein an optimal inter-arrival time is determined for each packet as the inter-departure time between said packet and the preceding packet.

This selection of packets which most closely retain their inter-packet spacing from the transmitting device on arrival at the receiving device can be assumed to have experienced the minimum packet delay variation in their passage over the network.

The plurality of groups of packets may be discrete (i.e. have no overlapping members). In particular the groups of packets may be the packets which arrive within a sequence of time windows with each group starting with the first packet after the last packet in the previous window. Alternatively, the groups of packets may contain common packets. One particular implementation of the latter arrangement is where the groups are the packets arriving within a sequence of "sliding" windows each of which may include, for example, the final 75%, 50%, 25% or 10% of the previous window, plus a corresponding proportion of packets arriving after the end of the previous window.

In particular embodiments of this aspect, the packets are timing messages sent from a master device to a slave device over the packet network. Preferably the packets are timing messages sent under the IEEE 1588 Precision Time Protocol (PTP).

In such embodiments, the method may further include the step of using the selected packets in the synchronization of a clock in the slave device to a master clock in the master device.

Frequency and time synchronization play a very important role in mobile networks. For example, mobile wireless base stations derive their carrier radio frequencies from highly accurate reference clocks in the network. However, the primary challenge in the design of a clock synchronization system for packet networks is to deal with packet delay variations (PDVs) - that is, the variation of the packet transit delays. IEEE 1588 Precision Time Protocol (PTP) is now the protocol of choice in the communication industry for distributing timing information from a master to one or more slaves. A clock recovery mechanism is then used at receiver side for recovery of the master clock. PDV is the primary contributor to the noise in the recovered clock and various techniques are needed to mitigate its effect. The clock recovery problem becomes even more challenging in particular when timing information is sent in an end-to-end fashion from master to slave (without any form of timing assistance from the intermediate packet network). By using only the selected packets (i.e. those with low levels of PDV) in the synchronization of the slave clock, a more accurate synchronization may be achieved. The selected packets can be used together with a clock recovery mechanism to mitigate the effects of PDV and thus minimize the noise in the recovered clock at the slave. The resulting effect is that the slave may be able to recover the master clock to a higher quality as if the communication path between master and slave is free of PDV.

The method of the present aspect may include any combination of some, all or none of the above described preferred and optional features.

The methods of the above aspect is preferably implemented by a slave device according to the first aspect of this invention or in a system according to the third aspect of this invention, as described below, but need not be.

Further aspects include computer programs for running on computer systems which carry out the methods of the above aspect, including some, all or none of the preferred and optional features of that aspect.

At their broadest, devices of the present invention provide a packet selection function which selects the packets arriving at the device which have characteristics closest to an optimal delay characteristic.

A second aspect of the present invention provides a first networked device as set out in claim 5.

The networked device of this aspect can operate a packet (or message) selection technique that selects packets with low packet delay variation (PDV) or noise induced by their passage across the network. The selected packets can then be used by the first networked device for applications which require low noise characteristics, such as clock synchronization. Preferably the repeated selection process in the device is performed by a processor in the device.

Preferably the groups of packets are all the packets arriving within a selected time window prior to the current time (i.e. the time at which the selection process runs).

The choice of the length of window may be varied depending on the situation. A longer window requires greater storage of previous values, and a more complex sorting operation to calculate the median. A shorter window runs the risk of not being statistically representative of the overall data set and being skewed by low frequency noise effects.

The first networked device is further arranged to: receive, from the second networked device, timestamps which are the time of sending said packets from the second device according to a clock in the second device; and determine, for each packet in said group, the inter-departure time between the packet and the preceding packet from the second device, wherein an optimal inter-arrival time is determined for each packet as the inter-departure time between said packet and the preceding packet.

This selection of packets which most closely retain their inter-packet spacing from the transmitting device on arrival at the receiving device can be assumed to have experienced the minimum packet delay variation in their passage over the network.

The plurality of groups of packets may be discrete (i.e. have no overlapping members). In particular the groups of packets may be the packets which arrive within a sequence of time windows with each group starting with the first packet after the last packet in the previous window. Alternatively, the groups of packets may contain common packets. One particular implementation of the latter arrangement is where the groups are the packets arriving within a sequence of "sliding" windows each of which may include, for example, the final 75%, 50%, 25% or 10% of the previous window, plus a corresponding proportion of packets arriving after the end of the previous window.

In particular embodiments of this aspect, the second networked device is a master device and the first networked device is a slave device and the packets are timing messages sent from the master device to the slave device over the packet network.

Preferably the packets are timing messages sent under the IEEE 1588 Precision Time Protocol (PTP).

In such embodiments, the first networked device may be further arranged to synchronize a clock in the first networked device to a master clock in the master device using the selected timing messages.

Frequency and time synchronization play a very important role in mobile networks. For example, mobile wireless base stations derive their carrier radio frequencies from highly accurate reference clocks in the network. However, the primary challenge in the design of a clock synchronization system for packet networks is to deal with packet delay variations (PDVs) - that is, the variation of the packet transit delays. IEEE 1588 Precision Time Protocol (PTP) is now the protocol of choice in the communication industry for distributing timing information from a master to one or more slaves. A clock recovery mechanism is then used at receiver side for recovery of the master clock. PDV is the primary contributor to the noise in the recovered clock and various techniques are needed to mitigate its effect. The clock recovery problem becomes even more challenging in particular when timing information is sent in an end-to-end fashion from master to slave (without any form of timing assistance from the intermediate packet network). By using only the selected packets with low levels of PDV in the synchronization of the slave clock, a more accurate synchronization may be achieved. The selected packets can be used together with a clock recovery mechanism to mitigate the effects of PDV and thus minimize the noise in the recovered clock at the slave. The resulting effect is that the slave is able to recover the master clock to a higher quality as if the communication path between master and slave is free of PDV.

The networked device of this aspect preferably operates by carrying out the relevant steps of a method according to the first aspect described above.

The networked device of the present aspect may include any combination of some, all or none of the above described preferred and optional features.

At their broadest, systems of the present invention provide a packet selection function which selects the packets transmitted from a first device to a second device which have characteristics closest to an optimal delay characteristic.

A third aspect of the present invention provides a networked system as set out in claim 7. The system of this aspect can operate a packet (or message) selection technique that selects packets with low packet delay variation (PDV) or noise induced by their passage across the network. The selected packets can then be used by the first networked device for applications which require low noise characteristics, such as clock synchronization.

Preferably the repeated selection process in the first device is performed by a processor in that device.

Preferably the groups of packets are all the packets arriving within a selected time window prior to the current time (i.e. the time at which the selection process runs).

The choice of the length of window may be varied depending on the situation. A longer window requires greater storage of previous values, and a more complex sorting operation to calculate the median. A shorter window runs the risk of not being statistically representative of the overall data set and being skewed by low frequency noise effects.

The selection of packets which most closely retain their inter-packet spacing from the transmitting device on arrival at the receiving device can be assumed to have experienced the minimum packet delay variation in their passage over the network.

The plurality of groups of packets may be discrete (i.e. have no overlapping members). In particular the groups of packets may be the packets which arrive within a sequence of time windows with each group starting with the first packet after the last packet in the previous window. Alternatively, the groups of packets may contain common packets. One particular implementation of the latter arrangement is where the groups are the packets arriving within a sequence of "sliding" windows each of which may include, for example, the final 75%, 50%, 25% or 10% of the previous window, plus a corresponding proportion of packets arriving after the end of the previous window.

In particular embodiments of this aspect, the second networked device is a master device and the first networked device is a slave device and the packets are timing messages sent from the master device to the slave device over the packet network.

Preferably the packets are timing messages sent under the IEEE 1588 Precision Time Protocol (PTP).

In such embodiments, the networked system may be further arranged to synchronize a clock in the first networked device to a master clock in the master device using the selected timing messages.

Frequency and time synchronization play a very important role in mobile networks. For example, mobile wireless base stations derive their carrier radio frequencies from highly accurate reference clocks in the network. However, the primary challenge in the design of a clock synchronization system for packet networks is to deal with packet delay variations (PDVs) - that is, the variation of the packet transit delays. IEEE 1588 Precision Time Protocol (PTP) is now the protocol of choice in the communication industry for distributing timing information from a master to one or more slaves. A clock recovery mechanism is then used at receiver side for recovery of the master clock. PDV is the primary contributor to the noise in the recovered clock and various techniques are needed to mitigate its effect. The clock recovery problem becomes even more challenging in particular when timing information is sent in an end-to-end fashion from master to slave (without any form of timing assistance from the intermediate packet network). By using only the selected packets with low levels of PDV in the synchronization of the slave clock, a more accurate synchronization may be achieved. The selected packets can be used together with a clock recovery mechanism to mitigate the effects of PDV and thus minimize the noise in the recovered clock at the slave. The resulting effect is that the slave is able to recover the master clock to a higher quality as if the communication path between master and slave is free of PDV.

The system of this aspect preferably operates by carrying out a method according to the above described first aspect.

The system of the present aspect may include any combination of some, all or none of the above described preferred and optional features.

Brief Description of the Drawings

Embodiments of the invention will now be described by way of example with reference to the accompanying drawings in which:

Figure 1 shows the message flow in a one-step clock under IEEE 1588 PTP and has already been described;

Figure 2 shows the message flow in a two-step clock under IEEE 1588 PTP and has already been described;

Figure 3 shows, in schematic form, the effect of Packet Delay Variation in a packet network and has already been described;

Figure 4 shows the effects of Packet Delay Variation on a PTP message stream and has already been described;

Figure 5 shows, in schematic form, the outline of end-to-end frequency/time transfer and has already been described;

Figure 6 shows, in overview, a clock recovery process involving packet pre-processing and has already been described;

Figure 7 shows, in schematic form, a packet selection process and has already been described;

Figure 8 shows the application of a stability metric to provide an assessment of the achievable output clock quality and has already been described;

Figure 9 shows the packet delay variation (PDV) distribution in three different load scenarios and has already been described;

Figure 10 shows the min/max/mean selection criteria for different PDV distributions and has already been described;

Figure 11 shows the effects of PDV on the inter-arrival times of PTP messages;

Figure 12 shows the evaluated performance of a selection algorithm according to a first embodiment of the present invention for different loads;

Figure 13 shows the evaluated performance of a selection algorithm according to a first embodiment of the present invention with changes in the forgetting factor;

Figure 14 shows the evaluated performance of a selection algorithm according to a second embodiment of the present invention for different loads;

Figure 15 shows the evaluated performance of a selection algorithm according to a second embodiment of the present invention with changes in the size of the sampling window; and

Figure 16 shows the evaluated performance of a selection algorithm according to a third embodiment of the present invention for different loads and compared to the selection algorithm according to the first embodiment of the present invention.

Detailed Description

Packet selection techniques according to embodiments of the present invention will now be described.

Let $T(n)$ denote the time base (e.g., in clock ticks) of the transmitter and $R(n)$ the time base of the receiver. These two functions correspond to the timestamps of the two clocks at discrete time instants $n$, $n = 0,1,2,....$ When timestamps are transmitted over the packet network, they will arrive at the receiver with variable delay. If $d(n)$ and $d(n-1)$ denote the delay experienced by the nth and $(n-1)$th timestamp at the receiver, respectively, then the delay variation induced by the network is given as $j(n) = d(n) - d(n-1)$. The timestamp difference between the nth and $(n-1)$th generated timestamp at the transmitter is defined as $\Delta T(n) = T(n) - T(n-1)$. Taking the transmission of Sync messages at the master, for example, $\Delta T(n)$ can be calculated as $\Delta T(n) = T_1(n) - T_1(n-1)$.

At the receiver, the timestamp difference between the nth and n-1th timestamp arrivals measured by the receiver clock is defined as $\Delta R(n) = R(n) - R(n-1)$. Note that the timestamp difference measured by the receiver includes the delay variation (PDV) experienced between the two arrivals, that is:

$$\Delta R(n) = \Delta T(n) + j(n) \qquad\qquad (8)$$

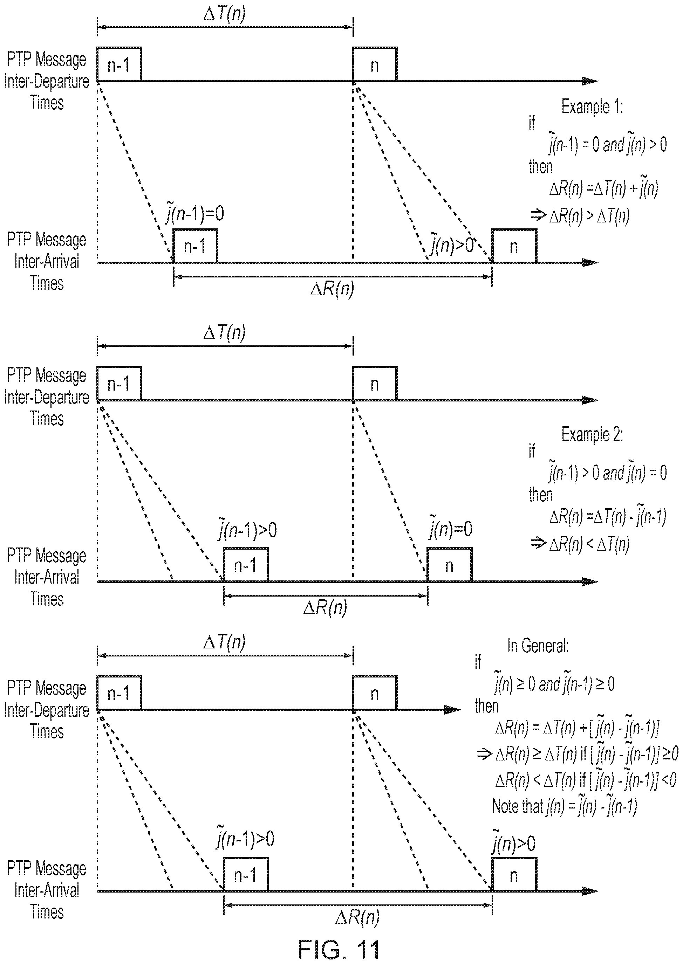

where $j(n)$ stands for nth sample's PDV. Again taking the reception of Sync messages at the slave, for example, $\Delta R(n)$ can be calculated as $\Delta R(n) = T_2(n) - T_2(n-1)$. Figure 11 illustrates the effects of the PDV on the PTP message inter-arrival times at the slave. We can deduce from Figure 11 that $j(n)$ can have values spread higher and lower around zero, that is, $j(n)$ is not necessarily a zero mean Gaussian random variable.

A goal of the packet selection techniques described below is to select pairs of consecutive timing packets in such a way that the spacing between packets in each individual pair will be constant across all selected pairs (in the average sense) at the slave. Essentially, the goal is to present to the clock recovery mechanism a stream of timing packets that appear to depart from the master and arrive at the slave with no effects of delay variations. Timing packets that have constant spacing generate the least noise in the recovered clock at the slave.

*Example packet selection techniques*

Two main techniques are described here, the first is based on extracting timing packets that create a constant spacing based on averaging $\Delta R(n)$, and the second is based on extracting the best packets that are the closest to satisfying the criterion $\Delta R(n) = \Delta T(n)$.

*Averaging of Inter-Arrival Times of Timing Messages*

Let us consider the following equation

$$E[\Delta R(n)] = E[\Delta T(n)] + E[j(n)] = \Delta T + \mu_j \,, \qquad (9)$$

where $E[\cdot]$ is the expectation operator (mean), $E[\Delta T(n)] = \Delta T$ is a constant for PTP transmissions, $E[j(n)] = \mu_j$ is the mean of $j(n)$ which is not necessarily Gaussian. For a stationary distribution, the mean $E[\Delta R(n)]$ is a constant and thus can serve as the criterion for selecting the optimal (best) timing packets. The best packet in a window of packets is the packet closest to the mean value. The reason is that by selecting the packet closest to the mean value (which is a constant or almost a constant), we are selecting the packet with minimal PDV (i.e., the packet with minimal displacement from a reference mean position). These packets produce a stream of timing packets with near-constant inter-arrival times at the slave. The "residual PDVs" in this stream of near-constant spacing of timing packets can easily be handled by filtering process in the slave clock recovery mechanism as explained above. In practice, there are a number of ways of measuring $E[\Delta R(n)]$, like the running mean, median or mode.

The packet selection algorithm according to a first example, which will be called the **"Mean of Inter-Arrival Times (MNIAT)"**, is based on the running mean of $\Delta R(n)$. To estimate the running mean of the underlying distribution, we use the simple Exponentially Weighted Moving Average (EWMA) filter,

$$M(n) = \alpha \cdot \Delta R(n) + (1-\alpha) \cdot M(n-1), \quad 0 < \alpha < 1 \qquad (10)$$

where $\alpha$ is the forgetting factor and $M(n)$ is the mean estimate for $n$th time instant (or measurement window). The **MNIAT algorithm** minimizes the PDV by using the mean estimator $M(n)$.

The packet selection algorithm according to a second example, which will be called the **"Median of Inter-Arrival Times (MDIAT)"**, is based on the median of $\Delta R$ values in a sampling window. We evaluate the Median of the underlying distribution as follows:

$$\{S_l\} = \text{sort}\lfloor \Delta R(k) \rfloor, n - L + 1 \le k \le n; 1 \le l \le L \qquad (11)$$

$$M(n) = \begin{cases} S_{(L+1)/2}, & L \text{ odd} \\ \dfrac{1}{2} \cdot \left( S_{L/2} + S_{1+L/2} \right), & L \text{ even} \end{cases} \qquad (12)$$

where $L$ is the window length of $\Delta R$ values. The **MDIAT algorithm** minimizes the PDV by using the above median estimator.

Using either the **MNIAT** or **MDIAT** algorithms, the packet selection function $g(x_k)$ (see box 12 in Figure 7), is then defined as follows:

$$x_{opt} = \arg_k(x_k) = g(x_k) = \min\{x_k - M(n)\}, n - L + 1 \le k \le n \qquad (13)$$

where $x_{opt}$ is the $\Delta R$ value of the selected packet, $n$ is the discrete sampling time instant, $L$ is the window size of $\Delta R$ samples, and $x_k$ is the $k$-th element in the packet selection window.

*Measures of Central Tendency*

A measure of central tendency is a single value that attempts to describe a set of data by identifying the central position within that set of data. As such, measures of central tendency are sometimes called measures of central location. They are also classed as summary statistics. The mean (often called the average) is most likely the measure of central tendency that people are most familiar with, but there are others, such as, the median and the mode. The mean, median and mode are all valid measures of central tendency but, under different conditions, some measures of central tendency become more appropriate to use than others.

• **Mean:** The mean (or average) is the most popular and well known measure of central tendency. It can be used with both discrete and continuous data. The mean is not often one of the actual values observed in the data set. However, one of its important properties is that it is the value that produces the lowest amount of error from all other values in the data set. An important property of the mean is that it includes every value in the data set as part of the calculation (and any change in any of the scores will affect the value of the mean). In addition, the mean is the only measure of central tendency where the sum of the deviations of each value from the mean is always zero. The mean has one main disadvantage: it is particularly susceptible to the influence of outliers. These are values that are unusual compared to the rest of the data set by being especially small or large in numerical value. Therefore, in this situation we would like to have a better measure of central tendency. Taking the median would be a better measure of central tendency in this situation.

• **Median:** The median is the middle score for a set of data that has been arranged in order of magnitude. The median is less affected by outliers and skewed data. A time when we usually prefer the median over the mean (or mode) is when our data is skewed (i.e. the frequency distribution for the data is skewed). If we consider the normal distribution - as this is the most frequently assessed in statistics - when the data is perfectly normal then the mean, median and mode are identical. Moreover, they all represent the most typical value in the data set. In fact, in any symmetrical unimodal distribution the mean, median and mode are equal. However, as the data becomes skewed the mean loses its ability to provide the best central location for the data as the skewed data is dragging it away from the typical value - we find that the mean is being dragged in the direction of the skew. However, the median best retains this position and is not as strongly influenced by the skewed values. In these situations, the median is generally considered to be the best representative of the central location of the data. The more skewed the distribution the greater the difference between the median and mean, and the greater emphasis should be placed on using the median as opposed to the mean. The median of a statistical distribution with cumulative distribution function $D(x)$ is the value $x$ such that $D(x) = 1/2$. For a symmetric distribution, it is therefore equal to the mean.

• **Mode:** The mode is the most frequent score in the data set. On a histogram it represents the highest bar in a bar chart or histogram. Normally, the mode is used for categorical data where we wish to know which is the most common category. However, one of the problems with the mode is that it is not unique, so it leaves us with problems when we have two or more values that share the highest frequency. This is particularly problematic when we have continuous data, as we are more likely not to have any one value that is more frequent than the other. This is why the mode is very rarely used with continuous data. Another problem with the mode is that it will not provide us with a very good measure of central tendency when the most common mark is far away from the rest of the data in the data set. The mode is the least used of the measures of central tendency and can only be used when dealing with nominal data.

*Equalizing Inter-Departure and Inter-Arrival Times of Timing Messages*

Let us define an error variable as a difference between receiver and transmitter inter-arrivals as follows:

$$e(n) = \Delta R(n) - \Delta T(n) = j(n) \qquad (14)$$

$$e(n) \to 0 \Rightarrow \Delta R(n) = \Delta T(n) \qquad (15)$$

The packet selection function according to a first embodiment of the present invention, which will be called "**Equalizing Inter-Departure and Inter-Arrival Times (EDAT)**", minimizes the effects of PDV by selecting timing messages such so that

$$e(n) = \Delta R(n) - \Delta T(n) = 0 \qquad\qquad (16)$$

The best packet here is the one that minimizes the error variable as it minimizes the PDV as well. This is done by selecting the packet within a window of packets with difference between inter-arrival time and inter-departure time **closest to the zero** ($\Delta R(n) \approx \Delta T(n)$) as this is the packet experiencing minimal PDV. These packets would thus best preserve the constant timing signal spacing at the transmitter.

The **MNIAT**, **MDIAT** and **EDAT** algorithms, which all share the same underlying idea, all allow for selecting the packet that minimizes the PDV. In the **MNIAT**, **MDIAT** and **EDAT** algorithms, the timestamps associated with the optimal packet in a window are captured then used in the slave clock recovery mechanism. A key advantage of using these techniques is that there is no need to switch between different packet selection criteria as is required in MMMA (see [1] for details) and moreover, the algorithms work for many other PDV distributions without any special handling.

*Performance Evaluation of the MNIAT Algorithm*

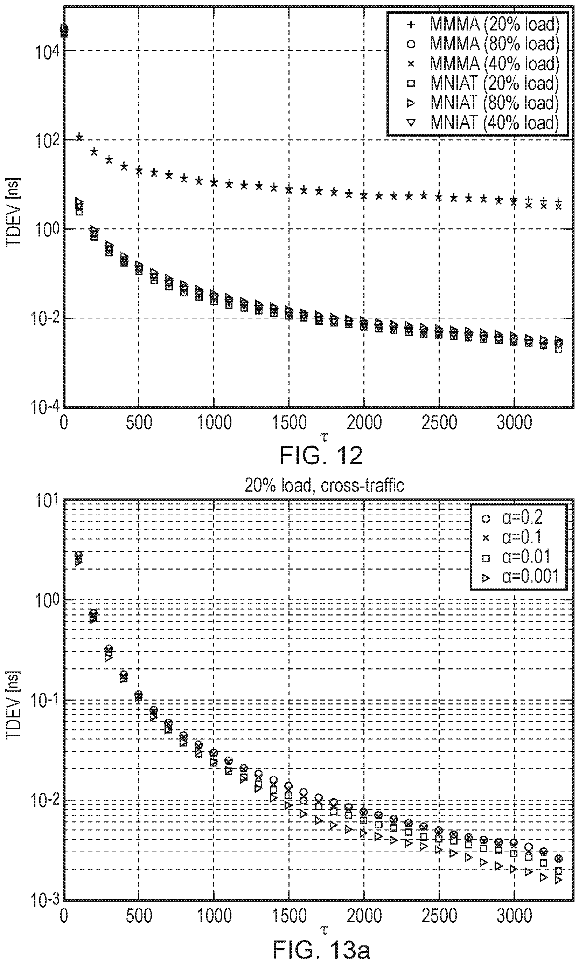

In this section the performance of the MNIAT algorithm is evaluated using the TDEV clock stability qualification metric. The following parameters are used in all tests: ensemble size is 10000 samples and $T_0$ is equal to one second. The Figure 12 shows the performance comparison between MMMA and MNIAT using different graphic markers with MMMA being shown by plus, circle and cross markers, whereas MNIAT by square, right-pointing and down-pointing triangles. The filtering parameter $\alpha$ in equation (10) above is set to 0.01.

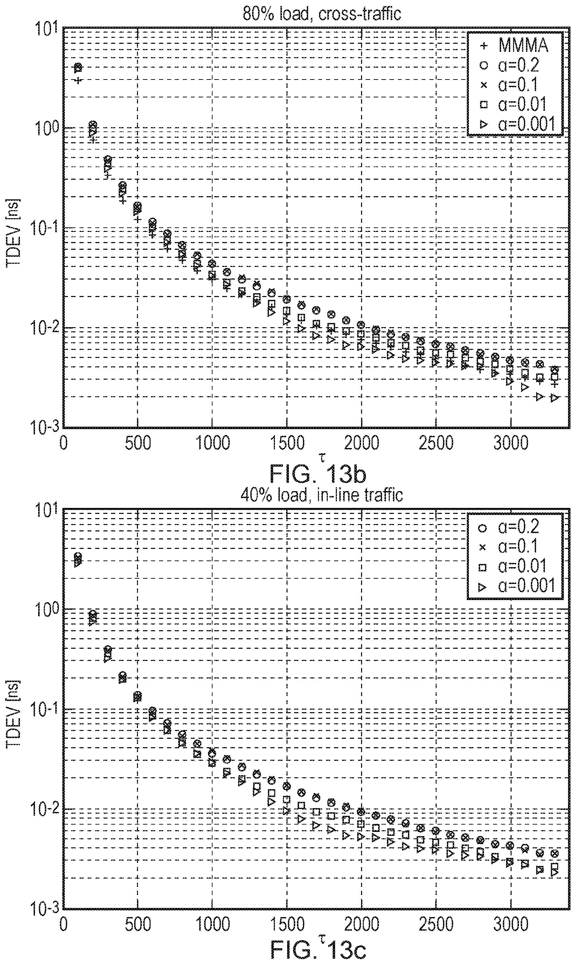

We can see from Figure 12 that MNIAT outperforms the MMMA for the 20% and 40% loads whilst it performs equally for the 80% load. This last case is because the MMMA algorithm outputs similar values using it's averaging technique as MNIAT algorithm and thus performs similarly. When detailed comparison is provided (see Figure 13) MNIAT algorithm outperforms MMMA. For other types of PDV distribution the MNIAT algorithm greatly outperforms the MMMA. The idea for the MMMA is based on averaging the deltaR itself for 80% load conditions and using the output of averaging for the PLL, rather then selecting a packet with value close to the estimate of the deltaR average as done by the MNIAT (that is why the MNIAT has only slightly better results for 80% load). For other load conditions the MMMA is not using averaging and thus failing to select the optimal packet. The TDEV with MNIAT is more than 100 times better for the 20% and 40% loads.

Next the performance of the MNIAT algorithm is studied for different values of $\alpha$ (as shown in Figure 13 for the different load conditions). Generally, the smaller the parameter $\alpha$ is the more precise the estimate of the underlying mean, but the longer it takes the filter to converge to that value. The results in Figure 13 show that the MNIAT algorithm performs better when lower values of $\alpha$ are being used.

*Performance Evaluation of the MDIAT Algorithm*

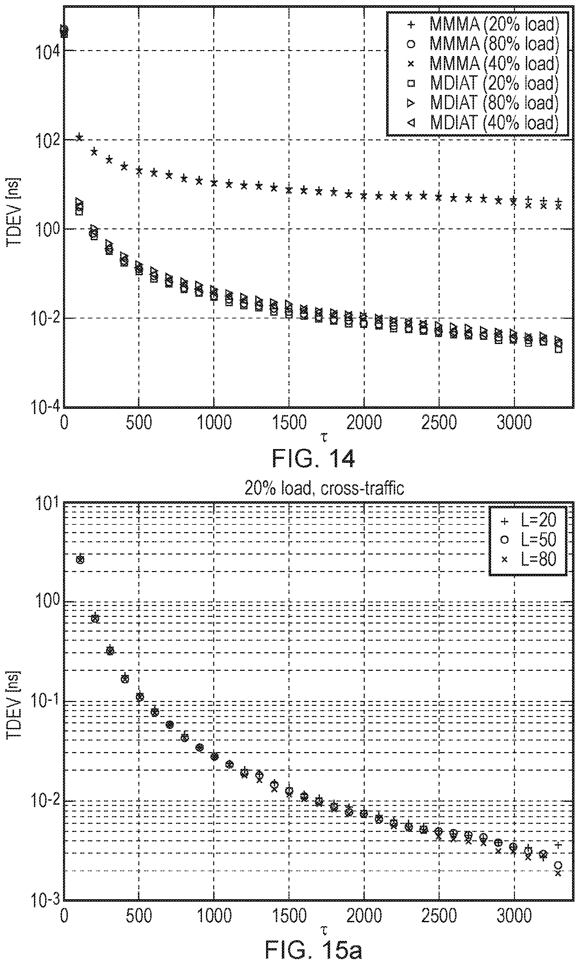

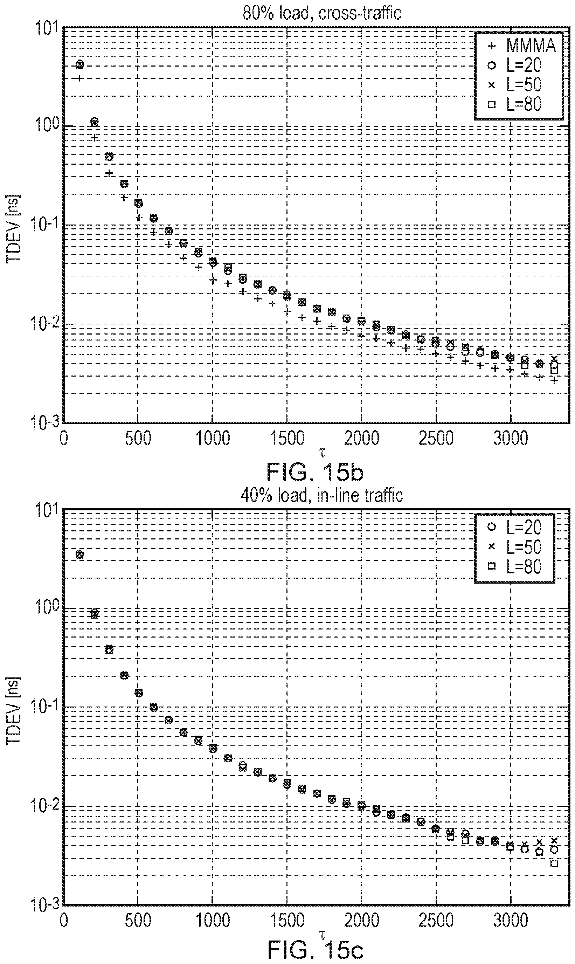

In this section the performance of the MDIAT algorithm is evaluated, again using the TDEV clock stability qualification metric. Figure 14 shows the performance of MDIAT and MMMA for different PDV distributions. The following setup is used in all tests: ensemble size is 10000 samples long and $T_0$ is equal to one second. The window length $L$ in (11) is set to 80. We see from Figure 14 that MDIAT outperforms the MMMA for the 20% and 40% loads while performs equally for the 80% load case similar to MNIAT. It can be seen that the differences between MNIAT and MDIAT results are not significant (compare Figure 12 to Figure 14). Logically, the greatest impact in terms of performance will be governed by the parameter $L$. Figure 15 presents the performance of MDIAT algorithm for different settings of parameter $L$.

From Figure 15, it can be seen that the MDIAT technique is not affected much by different settings of the parameter $L$. Similar to the MNIAT, the MDIAT has its initializing part. The initialization (which is equivalent to convergence) of the MDIAT involves how much time as it takes to fill the window with $L$ samples. Since it takes only 80 samples at most in our case, we assume that the MDIAT initialization part does not affect the performance at all.

*Performance Evaluation of the EDAT Algorithm*

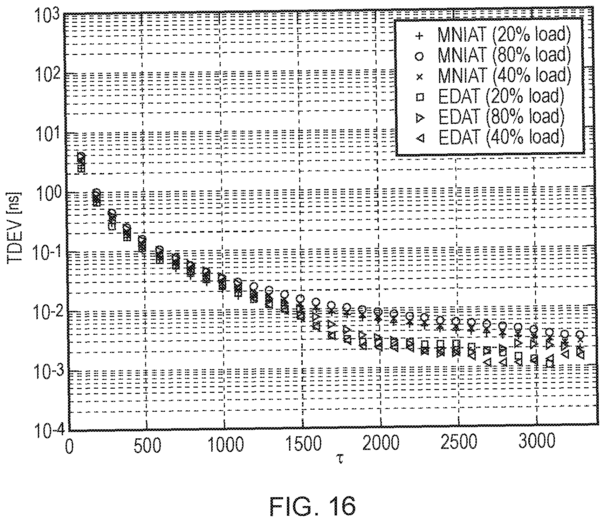

In this section the performance of the EDAT technique is evaluated, again using the TDEV clock stability qualification metric. The results of EDAT and MNIAT (with $\alpha = 0.01$) are compared for different types of PDV distributions as shown in Figure 16. The EDAT performs similar to the MNIAT for shorter windows, while it outperforms the MNIAT when using longer windows (> 1500 samples). That is because when a longer window is applied then it is more likely that the EDAT will see and select a sample with the truly lowest variance (zero PDV). As observed earlier, there is no better selection criterion for clock recovery than selecting the packet with inter-arrival time closest to the inter-departure time.

The systems and methods of the above embodiments may be implemented in a computer system (in particular

**EP 3 080 951 B1**

in computer hardware or in computer software) in addition to the structural components and user interactions described.

The term "computer system" includes the hardware, software and data storage devices for embodying a system or carrying out a method according to the above described embodiments. For example, a computer system may comprise a central processing unit (CPU), input means, output means and data storage. Preferably the computer system has a monitor to provide a visual output display (for example in the design of the business process). The data storage may comprise RAM, disk drives or other computer readable media. The computer system may include a plurality of computing devices connected by a network and able to communicate with each other over that network.

The methods of the above embodiments may be provided as computer programs or as computer program products or computer readable media carrying a computer program which is arranged, when run on a computer, to perform the method(s) described above.

The term "computer readable media" includes, without limitation, any non-transitory medium or media which can be read and accessed directly by a computer or computer system. The media can include, but are not limited to, magnetic storage media such as floppy discs, hard disc storage media and magnetic tape; optical storage media such as optical discs or CD-ROMs; electrical storage media such as memory, including RAM, ROM and flash memory; and hybrids and combinations of the above such as magnetic/optical storage media.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting.

In particular, although the methods of the above embodiments have been described as being implemented on the systems of the embodiments described, the methods and systems of the present invention need not be implemented in conjunction with each other, but can be implemented on alternative systems or using alternative methods respectively.

References

[1] Ilija Hadžic, Dennis R. Morgan: Adaptive Packet Selection for Clock Recovery. ISPCS, 2010 International IEEE Symposium.

[2] Lee Cosart: NGN Packet Network Synchronization Measurement and Analysis. IEEE Communications Magazine, February 2011.

[3] Karim Traore, Kishan Shenoi: Synchronization and Timing in Packet Networks. IEEE GLOBECOM 2010.

[4] ITU-T G.8260. Definitions and Terminology for Synchronization in Packet Networks. August 2010.

**Claims**

1. A method of selecting packets transmitted from a first device (1) to a second device (3) over a packet network (2), the method including the steps of:

   sending, from the first device to the second device, packets (21, 22);
   recording the time of receipt of said packets according to a clock (5) in the second device;
   repeatedly, for each of a plurality of groups of said packets:

      determining an optimal inter-arrival time between successive packets at the second device;
      calculating, for each packet in said group, the inter-arrival time between the packet and the preceding packet;
      sending, from the first device (1) to the second device (3), timestamps which are the time of sending said packets from the first device according to a clock in the first device;
      determining using the timestamps, for each packet in said group, the inter-departure time between the packet and the preceding packet from the first device; and
      selecting the packet in said group which has an inter-arrival time which is the closest to the optimal inter-arrival time wherein the optimal inter-arrival time is determined for each packet as the inter-departure time between said packet and the preceding packet.

2. The method according to claim 1 wherein the groups of packets are all the packets arriving within a selected time window prior to the current time.

3. The method according to any one of claims 1 or 2 wherein the packets are timing messages sent from a master device to a slave device over the packet network (2).

4. The method according to claim 3, further including the step of using the selected packets in the synchronization of a clock in the slave device to a master clock in the master device.

5. A first networked device (3) configured to be connected to a second networked device (1) over a packet network (2), wherein the first networked device (3) has a clock and is arranged to:

   receive packets from the second device (1);
   record the time of receipt of said packets according to said clock;
   repeatedly, for each of a plurality of groups of said packets:

      determine an optimal inter-arrival time between successive packets at the first device;
      calculate, for each packet in said group, the inter-arrival time between the packet and the preceding packet;

   the first network device being arranged to:

      receive, from the second networked device, timestamps which are the time of sending said packets from the second device (3) according to a clock in the second device;
      determine using the timestamps, for each packet in said group, the inter-departure time between the packet and the preceding packet from the second device; and
      select the packet in said group which has an inter-arrival time which is the closest to the optimal inter-arrival time wherein the optimal inter-arrival time is determined for each packet as the inter-departure time between said packet and the preceding packet.

6. The first networked device according to claim 5 wherein the groups of packets are all the packets arriving within a selected time window prior to the current time.

7. A networked system, the system including:

   a first networked device (1) according to any one of claims 5 or 6;
   a second networked device (3); and
   a packet network (2) connecting the first and second devices.

8. The networked system according to claim 7 wherein the second networked device is a master device and the first networked device is a slave device and the packets are timing messages sent from the master device to the slave device over the packet network (2).

9. The networked system according to claim 8, wherein the networked system is further arranged to synchronize a clock in the first networked device to a master clock in the master device using the selected timing messages.


**Patentansprüche**

1. Verfahren zum Auswählen von Paketen, die von einer ersten Vorrichtung (1) zu einer zweiten Vorrichtung (3) über ein Paketnetzwerk (2) übertragen werden, das Verfahren beinhaltend die folgenden Schritte:

   Senden von Paketen (21, 22) von der ersten Vorrichtung zu der zweiten Vorrichtung;
   Aufzeichnen der Empfangszeit der Pakete gemäß einer Uhr (5) in der zweiten Vorrichtung;
   wiederholt, für jede einer Vielzahl von Gruppen der Pakete:

      Bestimmen einer optimalen Zwischenankunftszeit zwischen aufeinanderfolgenden Paketen an der zweiten Vorrichtung;
      Berechnen, für jedes Paket in der Gruppe, der Zwischenankunftszeit zwischen dem Paket und dem vorhergehenden Paket;
      Senden, von der ersten Vorrichtung (1) zur zweiten Vorrichtung (3) von Zeitstempeln, die die Zeit des Sendens der Pakete von der ersten Vorrichtung gemäß einer Uhr in der ersten Vorrichtung sind;

Bestimmen, unter Verwendung der Zeitstempel, für jedes Paket in der Gruppe, der Zwischenabfahrtzeit zwischen dem Paket und dem vorhergehenden Paket von der ersten Vorrichtung; und
Auswählen des Pakets in der Gruppe, das eine Zwischenankunftszeit aufweist, die der optimalen Zwischenankunftszeit am nächsten liegt, wobei die optimale Zwischenankunftszeit für jedes Paket als die Zwischenankunftszeit zwischen dem Paket und dem vorhergehenden Paket bestimmt wird.

2. Verfahren nach Anspruch 1, wobei die Gruppen von Paketen alle Pakete sind, die innerhalb eines ausgewählten Zeitfensters vor der aktuellen Zeit ankommen.

3. Verfahren nach einem der Ansprüche 1 oder 2, wobei die Pakete Zeitgebungsnachrichten sind, die von einer Master-Vorrichtung über das Paketnetzwerk (2) an eine Slave-Vorrichtung gesendet werden.

4. Verfahren nach Anspruch 3, ferner beinhaltend den Schritt des Verwendens der ausgewählten Pakete bei der Synchronisation einer Uhr in der Slave-Vorrichtung mit einer Masteruhr in der Master-Vorrichtung.

5. Erste vernetzte Vorrichtung (3), die konfiguriert ist, um mit einer zweiten vernetzten Vorrichtung (1) über ein Paketnetzwerk (2) verbunden zu werden, wobei die erste vernetzte Vorrichtung (3) eine Uhr aufweist und angeordnet ist, um:

Pakete von der ersten Vorrichtung (1) zu empfangen;
die Empfangszeit der Pakete gemäß der Uhr aufzuzeichnen;
wiederholt, für jede einer Vielzahl von Gruppen der Pakete:

eine optimale Zwischenankunftszeit zwischen aufeinanderfolgenden Paketen an der zweiten Vorrichtung zu bestimmen;
für jedes Paket in der Gruppe die Zwischenankunftszeit zwischen dem Paket und dem vorhergehenden Paket zu berechnen;

wobei die erste Netzwerkvorrichtung angeordnet ist, um:

von der zweiten vernetzten Vorrichtung Zeitstempel zu empfangen, die die Zeit des Sendens der Pakete von der zweiten Vorrichtung (3) gemäß einer Uhr in der zweiten Vorrichtung sind;
unter Verwendung der Zeitstempel, für jedes Paket in der Gruppe,
die Abfahrtszeit zwischen dem Paket und dem vorhergehenden Paket von der zweiten Vorrichtung zu bestimmen; und
das Paket in der Gruppe, das eine Zwischenankunftszeit aufweist, die der optimalen Zwischenankunftszeit am nächsten liegt, auszuwählen, wobei die optimale Zwischenankunftszeit für jedes Paket als die Zwischenankunftszeit zwischen dem Paket und dem vorhergehenden Paket bestimmt wird.

6. Erste vernetzte Vorrichtung nach Anspruch 5, wobei die Gruppen von Paketen alle Pakete sind, die innerhalb eines ausgewählten Zeitfensters vor der aktuellen Zeit ankommen.

7. Vernetztes System, das System beinhaltend:

eine erste vernetzte Vorrichtung (1) nach einem der Ansprüche 5 oder 6;
eine zweite vernetzte Vorrichtung (3); und
ein Paketnetzwerk (2), das die ersten und zweiten Vorrichtungen verbindet.

8. Vernetztes System nach Anspruch 7, wobei die zweite vernetzte Vorrichtung eine Master-Vorrichtung ist und die zweite vernetzte Vorrichtung eine Slave-Vorrichtung ist und die Pakete Zeitgebungsnachrichten sind, die von der Master-Vorrichtung über das Paketnetzwerk (2) an die Slave-Vorrichtung gesendet werden.

9. Vernetztes System nach Anspruch 8, wobei das vernetzte System ferner angeordnet ist, um eine Uhr in der ersten vernetzten Vorrichtung mit einer Masteruhr in der Master-Vorrichtung unter Verwendung der ausgewählten Zeitgebungsnachrichten zu synchronisieren.

**EP 3 080 951 B1**

## Revendications

**1.** Procédé de sélection de paquets transmis d'un premier dispositif (1) à un second dispositif (3) sur un réseau de paquets (2), le procédé incluant les étapes consistant à :

envoyer, du premier dispositif au deuxième dispositif, des paquets (21, 22) ;
enregistrer le temps de réception desdits paquets selon une horloge (5) dans le second dispositif ;
de manière répétée, pour chacun d'une pluralité de groupes desdits paquets :

déterminer un temps d'inter-arrivées optimal entre des paquets successifs au niveau du second dispositif ;
calculer, pour chaque paquet dans ledit groupe, le temps d'inter-arrivées entre le paquet et le paquet précédent ;
envoyer, du premier dispositif (1) au deuxième dispositif (3), des horodatages qui correspondent au temps d'envoi desdits paquets à partir du premier dispositif conformément à une horloge dans premier dispositif ;
déterminer, à l'aide des horodatages, pour chaque paquet dans ledit groupe, le temps d'inter-départs entre le paquet et le paquet précédent provenant du premier dispositif ; et
sélectionner le paquet dans ledit groupe qui a un temps d'inter-arrivées qui est le plus proche au temps d'inter-arrivées optimale, dans lequel le temps d'inter-arrivées optimale est déterminée pour chaque paquet en tant que temps d'inter-départs entre ledit paquet et le paquet précédent.

**2.** Procédé selon la revendication 1, dans lequel les groupes de paquets sont tous les paquets arrivant pendant une fenêtre temporelle sélectionnée avant le temps actuelle.

**3.** Procédé selon l'une quelconque des revendications 1 ou 2, dans lequel les paquets sont des messages de synchronisation envoyés d'un dispositif maître à un dispositif esclave sur le réseau de paquets (2).

**4.** Procédé selon la revendication 3, incluant en outre l'étape d'utilisation des paquets sélectionnés dans la synchronisation d'une horloge du dispositif esclave sur une horloge maîtresse du dispositif maître.

**5.** Premier dispositif en réseau (3) configuré pour être connecté à un second dispositif en réseau (1) sur un réseau de paquets (2), dans lequel le premier dispositif en réseau (3) a une horloge et est agencé pour :

recevoir des paquets du deuxième dispositif (1) ;
enregistrer le temps de réception desdits paquets en fonction de ladite horloge ;
de manière répétée, pour chacun d'une pluralité de groupes desdits paquets :

déterminer un temps d'inter-arrivées optimal entre des paquets successifs au premier dispositif ;
calculer, pour chaque paquet dans ledit groupe, le temps d'inter-arrivées entre le paquet et le paquet précédent ;

le premier dispositif de réseau étant agencé pour :

recevoir, du second dispositif en réseau, des horodatages qui sont le temps d'envoi desdits paquets depuis le second dispositif (3) conformément à une horloge du second dispositif ;
déterminer, en utilisant les horodatages, pour chaque paquet dans ledit groupe, le temps d'inter-départs entre le paquet et le paquet précédent provenant du deuxième dispositif ; et
sélectionner le paquet dans ledit groupe qui a un temps d'inter-arrivées qui est le plus proche au temps d'inter-arrivées optimale, dans lequel le temps d'inter-arrivées optimale est déterminée pour chaque paquet en tant que temps d'inter-départs entre ledit paquet et le paquet précédent.

**6.** Premier dispositif en réseau selon la revendication 5, dans lequel les groupes de paquets sont tous les paquets arrivant pendant une fenêtre temporelle sélectionnée avant le temps actuelle.

**7.** Système en réseau, le système incluant :

un premier dispositif en réseau (1) selon l'une quelconque des revendications 5 ou 6;
un second dispositif en réseau (3); et
un réseau de paquets (2) connectant les premier et second dispositifs.

17

8. Système en réseau selon la revendication 7, dans lequel le second dispositif en réseau est un dispositif maître et le premier dispositif en réseau est un dispositif esclave et les paquets sont des messages de synchronisation envoyés du dispositif maître au dispositif esclave via le réseau de paquets (2).

9. Système en réseau selon la revendication 8, dans lequel le système en réseau est en outre agencé pour synchroniser une horloge dans le premier dispositif en réseau avec une horloge maîtresse dans le dispositif maître en utilisant les messages de synchronisation sélectionnés.

FIG. 1

**FIG. 2**

FIG. 3

FIG. 4

FIG. 5

FIG. 6

FIG. 7

FIG. 8

FIG. 9a

80% load

FIG. 9b

40% load

FIG. 9c

FIG. 10

FIG. 11

FIG. 12

20% load, cross-traffic

FIG. 13a

FIG. 13b

FIG. 13c

FIG. 14

20% load, cross-traffic

FIG. 15a

80% load, cross-traffic

FIG. 15b

40% load, in-line traffic

FIG. 15c

FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2004075447 A1

### Non-patent literature cited in the description

- **MURAKAMI et al.** Improvement of Synchronization Accuracy in IEEE 1588 Using a Queuing Estimation Method. *IEEE Symposium on Precision Clock Synchronization for Measurement, Control, and Communication,* 12 October 2009
- **ILIJA HADŽIĆ ; DENNIS R. MORGAN.** Adaptive Packet Selection for Clock Recovery. *ISPCS, 2010 International IEEE Symposium,* 2010
- **LEE COSART.** NGN Packet Network Synchronization Measurement and Analysis. *IEEE Communications Magazine,* February 2011
- **KARIM TRAORE ; KISHAN SHENOI.** Synchronization and Timing in Packet Networks. *IEEE GLOBECOM,* 2010
- **ITU-T G.8260.** *Definitions and Terminology for Synchronization in Packet Networks,* August 2010